# EUROPEAN PATENT APPLICATION

(11) **EP 1 850 343 A1**
(43) Date of publication of application: **31.10.2007**
(21) Application number: 07107127.8
(22) Date of filing: 27.04.2007
(51) Int. Cl.: G11B 21/12, G11B 19/04

(54) **Hard disk drive protection apparatus and method, and device having the same**

(30) Priority: 28.04.2006 KR 20060038869; 07.03.2007 US 682997
(71) Applicant: Samsung Electronics Co., Ltd., Suwon-si, Gyeonggi-Do (KR)
(72) Inventor: Lee, Sang-hun, Gyeonggi-do (KR)
(74) Representative: Grünecker, Kinkeldey, Stockmair & Schwanhäusser Anwaltssozietät

(57) **Abstract**

A hard disk drive (HDD) protection apparatus includes a signal receiving unit to receive an incoming alert signal and to generate a notice signal, and a controller to receive the notice signal and to control operations of the HDD and an alert generator based on the notice signal.

## Description

### CROSS-REFERENCE TO RELATED APPLICATIONS

This application claims priority under 35 U.S.C. § 119 (a) from Korean Patent Application No. 10-2006-0038869, filed on April 28, 2006, in the Korean Intellectual Property Office, the disclosure of which is hereby incorporated in its entirety by reference.

### BACKGROUND OF THE INVENTION

### 1. Field of the Invention

The present general inventive concept relates to a hard disk drive (HDD) protection apparatus and method, and a device having the same, and more particularly, to an HDD protection apparatus and method to control an HDD protection procedure of the HDD in response to an alert signal, and a device having the same.

### 2. Description of the Related Art

A hard disk drive (HDD) is a data storage device to read data from and write data to a magnetic disk disposed therein. Today, a variety of electronic devices, such as, mobile phones, personal digital assistants (PDAs), portable computers, and the like, have an HDD installed therein to store data.

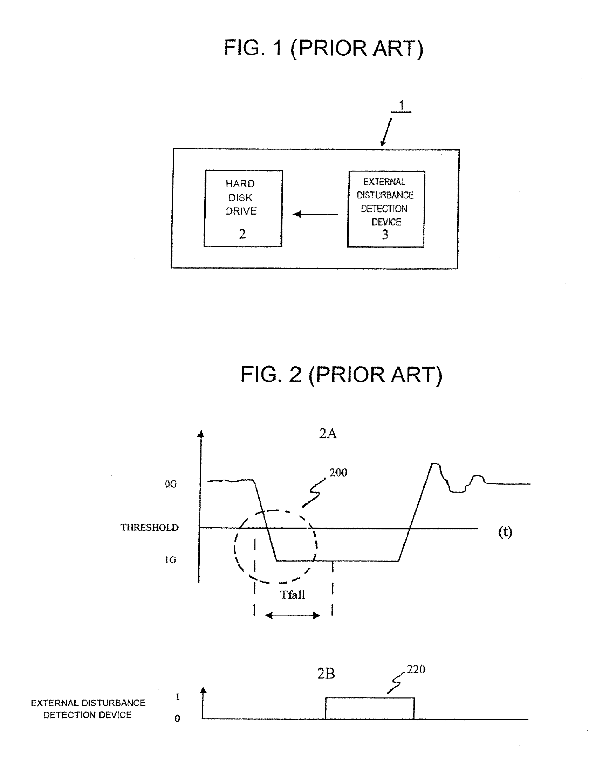

A conventional electronic device may have an HDD protection system to protect the HDD from disturbances, such as, external shocks or vibrations. FIG. 1 illustrates a conventional electronic device 1 having an HDD 2 and a conventional HDD protection system. As illustrated in FIG. 1, a conventional electronic device 1 includes an HDD 2 and an external disturbance detection device 3. In the conventional HDD protection system, the external disturbance detection device 3 detects an external disturbance, such as a shock or vibration, and if the detection level is greater than a predetermined threshold level, disturbance detection information is sent to the HDD 2 so that the HDD 2 can proceed to an HDD protection procedure.

FIG. 2 illustrates an operation of the external disturbance detection device 3 of FIG. 1. With respect to FIG. 2, the external disturbance detection device 3 includes a free fall sensor to detect an acceleration of gravity. In the conventional HDD protection system of FIGS. 1 and 2, the external disturbance detection device 3 acting as the free fall sensor detects a 0G acceleration of the electronic device 1 in a normal operation status. However, when the free fall sensor senses an increase of the acceleration of the electronic device 1 above a threshold level and for a predetermined period of time (Tfall), as illustrated in FIG. 2A, the free fall sensor recognizes that the electronic device 1 is in a free fall state (200) and sends disturbance detection information (220) to the HDD so that the HDD 2 can proceed to the HDD protection procedure, as illustrated in FIG. 2B.

However, the conventional HDD protection system has a disadvantage in that a disturbance must be detected by a sensor, and the disturbance must exceed the predetermined threshold with respect to intensity and duration before the detection information is sent to the HDD to proceed to the protection procedure.

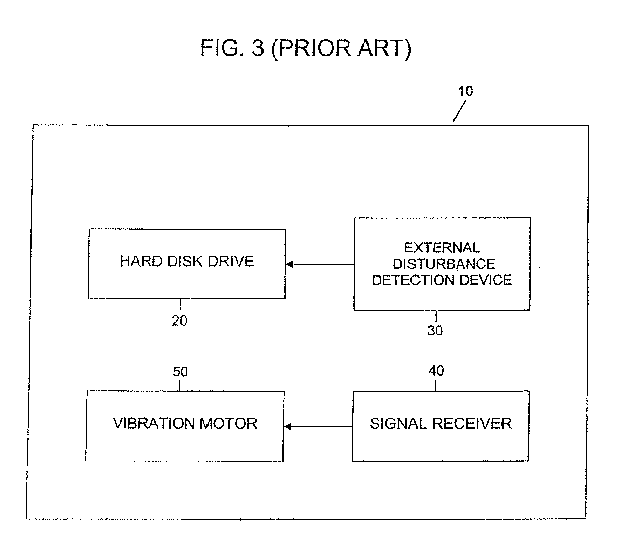

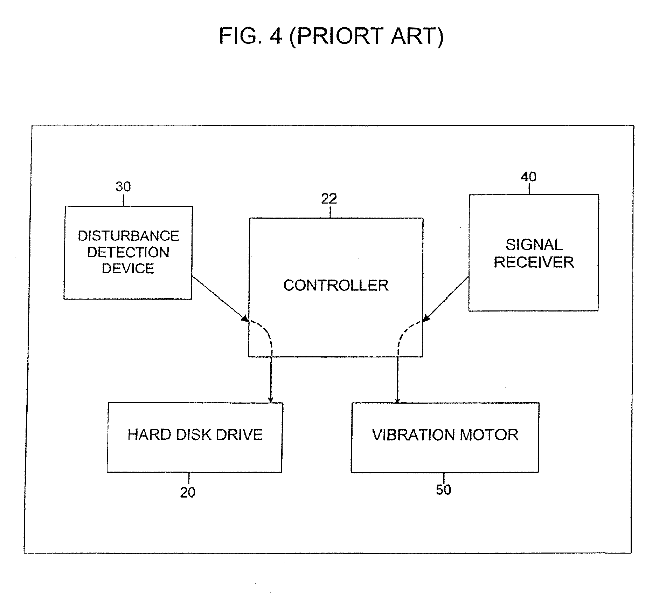

This disadvantage is more clearly appreciated when the conventional electronic device includes a vibration mechanism to alert a user of the electronic device 1 of an incoming data signal. FIG. 3 illustrates another conventional electronic device 10 having an HDD 20, an external disturbance detection device 30, a signal receiver 40, and a vibration motor 50. In the conventional electronic device 10 illustrated in FIG. 3, the external disturbance detection device 30 and the HDD 20 operate to detect an external disturbance and to send the HDD 20 into the protection procedure the same way as described with respect to the device of FIGS. 1 and 2. Additionally, the signal receiver 40 receives a signal corresponding to an incoming call signal and sends a vibration signal to the vibration motor 50 to vibrate the electronic device 10, thus alerting the user of the electronic device 10 of the incoming call signal. Alternatively, as illustrated in FIG. 4, the conventional electronic device 10 may also include a controller 22 to control communication between the external disturbance detection device 30 and the HDD 20, and the signal receiver 40 and the vibration motor 50. That is, the controller 22 receives the external disturbance signal from the external disturbance detection device 30 and controls the HDD 20 to proceed to the HDD protection procedure, and separately receives an incoming call signal from the signal receiver 40 and controls the vibration motor 50 to vibrate to alert the user of the incoming call.

However, while the above conventional HDD protection system may be adequate for disturbances in which the HDD has enough time to prepare for protection, such as the case of a free fall, the conventional HDD protection system may not be adequate for other faster acting disturbances, such as disturbances caused by a vibration due to a vibration alert of a mobile phone, or a disturbance caused by a audio alert of an electronic device. That is, the HDD may be affected by the vibration generated by the vibration motor before the disturbance detection device detects the vibration or sends the disturbance detection signal to the controller.

### SUMMARY OF THE INVENTION

The present general inventive concept provides a hard disk drive (HDD) protection apparatus and method to control the HDD to proceed to a protection procedure in response to an alert signal that may generate a disturbance to the HDD.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept are achieved by providing a hard disk drive protection apparatus, including a hard disk drive (HDD), an alert generator, a notice signal generation unit to generate a notice signal, and a controller to receive the notice signal and to control operations of the HDD and the alert generator based on the notice signal.

The controlling of the HDD and the alert generator by the controller may include generating a protection control signal to control the HDD to proceed to an HDD protection procedure and generating an alert control signal to control the alert generator to generate an alert.

The controller may send the protection control signal before sending the alert control signal.

The controller may simultaneously send the protection control signal and the alert control signal.

The protection control signal and the alert control signal may include the same control signal.

The apparatus may further include a delay unit to delay the control signal sent to the alert generator, wherein the controller selectively sends the control to the alert generator through the delay unit to delay the control signal a predetermined amount of time with respect to the control signal sent to the HDD.

The predetermined amount of time may correspond to a time for the HDD to be protected under the HDD protection procedure.

The notice signal generation unit may include a signal receiver to receive an incoming data signal and to generate the notice signal.

The notice signal generation unit may include an internal notice signal generator to generate the notice signal.

The internal notice signal generator may generate the notice signal based on a user request.

The notice signal generation unit may include at least one of an internal notice signal generator and a signal receiver.

The apparatus may further include a disturbance detection unit to detect a disturbance that affects the HDD and to generate a disturbance notice, wherein the controller receives the disturbance notice and controls the HDD to proceed to the HDD protection procedure.

The disturbance detection unit may include a free fall sensor.

The foregoing and/or other aspects and utilities of the present general inventive concept are also be achieved by providing a hard disk drive (HDD) protection apparatus, including a signal receiving unit to receive an incoming data signal and to generate a notice signal based on the incoming data signal, and a controller to receive the notice signal and to control operations of the HDD and an alert generator based on the notice signal.

The incoming data signal may include a signal of arrival of a phone call or a message.

The alert generator may include at least one of a vibration generation unit and an audio alert generating unit.

The controller may control the operations of the HDD and the alert generator by generating a control signal to protect the HDD and to create an alert, and by sending the control signal to the HDD and the alert generator such that the HDD is protected before the alert generator generates the alert.

The control signal may control the HDD to become protected before the alert generator generates the alert.

The control signal may include information to control the HDD to become protected during time periods when the alert is created.

The control signal may control the HDD to become protected by disabling operations thereof.

The control signal may control the HDD to become disabled for a first predetermined amount of time before each occurrence of the alert and to become enabled for a second predetermined amount of time after completion of each occurrence of the alert.

The generation of the alert may include generation of a sequence of alerts, and the control signal may control the HDD to become disabled during the complete sequence of alerts.

The control signal may control the HDD to become disabled when the alert is determined to be greater that a predetermined threshold.

The foregoing and/or other aspects and utilities of the present general inventive concept are also be achieved by providing a mobile device, including an HDD to read and/or write data from and/or to a disc, an alert generator to generate an alert in response to a second control signal, a receiving unit to receive an incoming data signal and to generate a notice signal based on the incoming data, and a control unit to generate a first control signal to control the HDD to proceed to an HDD protection procedure and the second control signal to control the alert generator in response to receiving the notice signal, and to transmit the first and second control signals to the HDD and the alert generator, respectively.

The first control signal may control the HDD to enter a protection mode before the alert generator generates the alert.

The control unit may transmit the first control signal a predetermined amount of time before transmitting the second control signal such that the HDD is controlled to enter into a protection mode before the alert generator generates the alert.

The mobile device may be one of a PDA, a cellular device, and a laptop computer.

The foregoing and/or other aspects and utilities of the present general inventive concept are also be achieved by providing a method of protecting an HDD in a device, the method including generating a notice signal when a notice to generate an alert is detected, determining whether the device is in an alert mode that will affect the HDD, controlling operation of the HDD and generation of the alert on the device, respectively, when it is determined that the device is in the affecting alert mode.

The controlling of the operation of the HDD and the generation of the alert on the device may include placing the HDD in a protection mode before the alert is generated.

The foregoing and/or other aspects and utilities of the present general inventive concept are also be achieved by providing a method of protecting an HDD in a device, the method including generating a notice signal when incoming data is received by the device, determining whether the device is in an alert mode, and controlling operation of the HDD and generation of the alert on the device, respectively, when it is determined that the device is in the alert mode.

The controlling of the operation of the HDD may include placing the HDD in a protection mode when it is determined that the device is in the alert mode.

The protection mode may include one of disabling the HDD during intervals of alert, disabling the HDD throughout a complete set of alerts of the alert mode, and controlling the HDD to perform predetermined operations throughout a complete set of alerts of the alert mode.

The protection mode may include one of disabling the HDD during intervals of alerts, disabling the HDD throughout a complete set of alerts of the alert mode, and controlling the HDD to perform specific operations throughout a complete set of alerts of the alert mode when the alerts are within a predetermined threshold level.

The disabling of the HDD may include placing an actuator in a parking mode.

The placing of the HDD in a protection mode may take place before the alerts of the alert mode are generated.

The controlling of operation of the HDD and alert of the device may include controlling operations of the HDD before controlling the alerts of the mobile device.

The controlling of operation of the HDD may include controlling operations of the HDD to enter a protection mode during the alerts.

The incoming data may be a call signal.

The foregoing and/or other aspects and utilities of the present general inventive concept are also be achieved by providing a method of protecting an HDD in a device, the method including determining whether the device is in an alert mode when an incoming data signal is received, and controlling operations of the HDD to correspond with an alert sequence of alerts during the alert mode when it is determined that the device is in the alert mode.

The controlling of the operations of the HDD to correspond with the alert sequence may include one of controlling the HDD to park an actuator thereof during the alerts, controlling the HDD to park an actuator thereof during a complete set of alerts of the alert sequence, and controlling the HDD to park an actuator thereof when alerts are above a predetermined threshold.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIG. 1 illustrates a conventional electronic device having an HDD and a conventional HDD protection system;

FIG. 2 illustrates an operation of a free fall sensor of the conventional HDD protection system of FIG. 1;

FIG. 3 illustrates conventional electronic device having a conventional HDD protection system and a vibration motor;

FIG. 4 illustrates another conventional electronic device having a conventional HDD protection system and a vibration motor;

FIG. 5 illustrates an electronic device having an HDD and a HDD protection apparatus according to an embodiment of the present general inventive concept;

FIG. 6 is a flow chart illustrating an operation of the HDD protection apparatus of FIG. 3 according to an embodiment of the present general inventive concept;

FIG. 7 is a flow chart illustrating an operation of the HDD protection apparatus of FIG. 3 according to another embodiment of the present general inventive concept;

FIG. 8 illustrates a timing chart for an HDD and HDD protection apparatus according to an embodiment of the present general inventive concept;

FIG. 9 illustrates an electronic device having an HDD and a HDD protection apparatus according to another embodiment of the present general inventive concept;

FIG. 10 illustrates an electronic device having an HDD and a HDD protection apparatus according to yet another embodiment of the present general inventive concept;

FIG. 11 illustrates an electronic device having an HDD and a HDD protection apparatus according to yet another embodiment of the present general inventive concept;

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

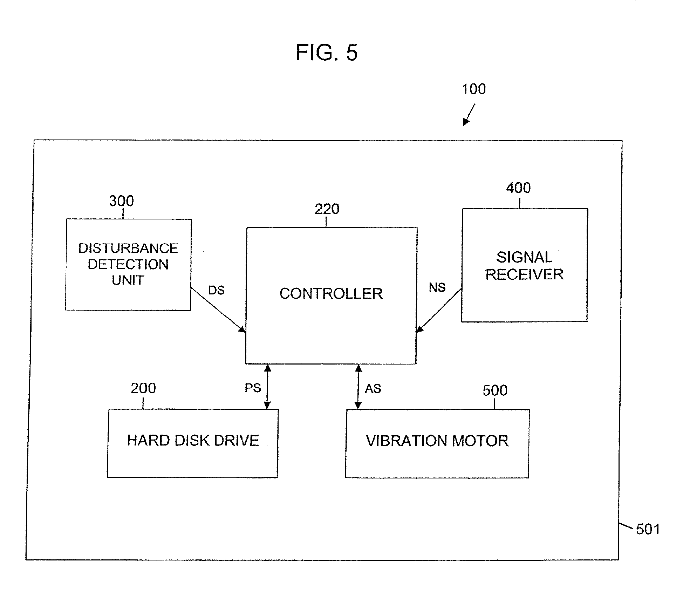

FIG. 5 illustrates an electronic device 100 having an HDD and a HDD protection apparatus according to an embodiment of the present general inventive concept. As illustrated in FIG. 5, the electronic device 100, such as a mobile phone, a PDA, and the like, may include a controller 220, a disturbance detection unit 300, a signal receiver 400, a vibration motor 500, and a hard disk drive (HDD) 200 disposed in a main frame 501.

The signal receiver 400 receives a signal corresponding to incoming data, such as, for example, a phone call in the case of the mobile phone, and transmits a notice signal NS to the controller 220. The notice signal NS transmitted to the controller 220 may also vary according to the type of incoming data signal received by the signal receiver 400. For example the notice signal NS may differentiate for a text message and a phone call in the case of the mobile phone.

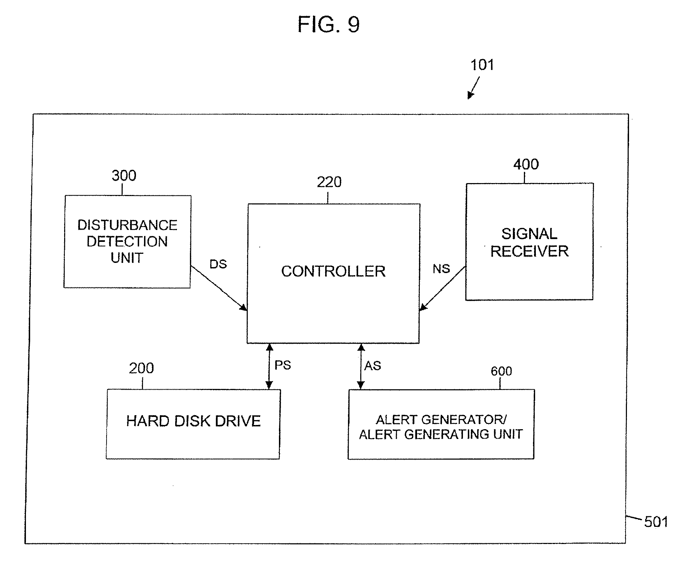

The electronic device 100 may be set by a user or manufacturer to generate various types of predetermined alerts corresponding to incoming data, or may be set to generate different types of alerts corresponding to different types of incoming data. For example, in the case of the mobile phone as the electronic device 100, the user may set the mobile phone to a vibrate mode to correspond to incoming phone calls, and/or to an audio alert mode to correspond to data or text transmissions. That is, the vibration motor 500 serves to generate an alert to alert a user of incoming data. While the embodiment illustrated in FIG. 5 illustrates the vibration motor 500 as the alert generator, the present general inventive concept is not limited thereto, and the alert generator can take various different forms. For example, as illustrated in the embodiment of FIG. 9, an alert generator 600 can also include a motion unit (not illustrated) to move with respect to the main frame 501, or an audio alert generator (not illustrated) to generate an audible alert in an electronic device 101. In addition, the alert may include a series or sequences of alerts, for example, a sequence of vibration alerts generated by the vibration motor 500, and/or may combine various types of alerts, for example a vibration alert and an audio alert generated by a combination of alert generators used as a alert generating unit 600. Additionally, the type of alert signal used or combination of alert signals used may correspond to the type of notice signal NS received.

In the embodiment illustrated in FIG. 5, the controller 220 controls the vibration motor 500 to generate the predetermined alert signal, which in this case is a vibration caused by the vibration motor with respect to the main frame 501.

In a case where the alert signal may affect operations of the HDD 200, the controller 220 may control operations of the HDD 200 and the vibration motor 500, such that, when the controller 220 receives the notice signal NS, the controller 220 can control the HDD 200 to proceed to an HDD protection procedure simultaneously or before the controller 220 controls the vibration motor 500 to generate the predetermined alert signal. Alternatively, in a case where the vibration motor 500 takes a predetermined amount of time to generate the alert signal, the controller 220 may control the HDD 200 to prepare for the HDD protection procedure and then control the vibration motor 500 to generate the predetermined alert signal, such that, by the time the vibration motor 500 generates the predetermined alert signal, the HDD 200 is protected.

Additionally, the disturbance detection unit 300, which can include a free fall sensor, serves to detect an external disturbance, such as a free fall or shock to the electronic device 100, and sends a disturbance detection signal DS to the controller 220 if the external disturbance exceeds predetermined thresholds set by the manufacturer or user. The controller 220 then controls the HDD 200 to proceed to the HDD protection procedure in response to receiving the disturbance detection signal DS.

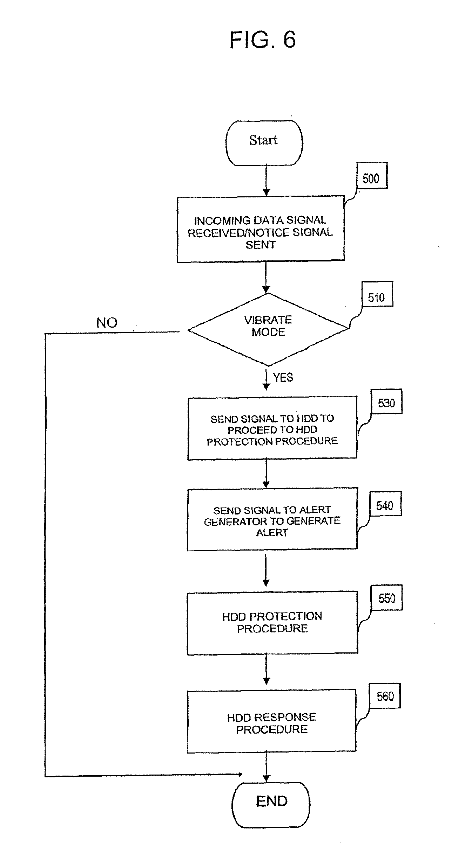

FIG. 6 is a flow chart illustrating a method of operating the HDD protection apparatus of FIG. 5, according to an embodiment of the present general inventive concept. As illustrated in FIG. 6, in operation 500, an incoming data signal is received by the signal receiver 400, and then a notice signal NS corresponding to the incoming data signal is generated and sent by the signal receiver 400 to the controller 220. In operations 510, the controller 220 determines whether the electronic device 100 has been set to a vibrate mode.

In operations 530 through 550, if the controller 220 determines that the electronic device 100 has been set to a vibrate mode that will trigger at a predetermined threshold, the controller 220 controls the HDD 200 to proceed to the HDD protection procedure and simultaneously controls the vibration motor 500 to generate the alert signal corresponding to the notice signal NS received. Alternatively, the controller 220 can control the HDD 200 to proceed to the HDD protection procedure before the controller 220 controls the vibration motor 500 to generate the alert signal. For example, in operation 530 the controller can send a protection signal PS to the HDD 200 to proceed to the HDD protection procedure, then in operation 540, the controller 220 can send a signal to the vibration motor 500 to generate the alert, and in operation 550 the HDD 200 can proceed to the HDD protection procedure in consideration of the alert generation procedure.

The HDD protection procedure for the HDD 200 may vary according to the type or level of the alert signal. HDD protection procedures are known in the art, and may take various different forms. For example, the HDD protection procedure may include disabling the HDD 200 during the alert, placing an actuator (not illustrated) of the HDD in a parking mode during the alert, and the like. The controller 220 may use the same signal to control the HDD 200 and the vibration motor 500. That is, for example, the controller 220 can send a vibration motor control signal AS to the HDD 200 as the protection signal PS in respond to the received notice signal NS to control the HDD 200 to proceed to the HDD protection procedure, and can send the same motor control command to the vibration motor 500 to generate the alert, such that by the time the vibration motor 500 generates the alert, in the form of a vibration, the HDD 200 is protected.

In operation 560, the HDD 200 can select a procedure to respond to the signal of the controller 220 to proceed to the HDD protection procedure. The electronic device 100 and the HDD 200 may each have a system controller, such that command and information exchange between the electronic device 100 and the HDD 200 may be available in various forms and procedures.

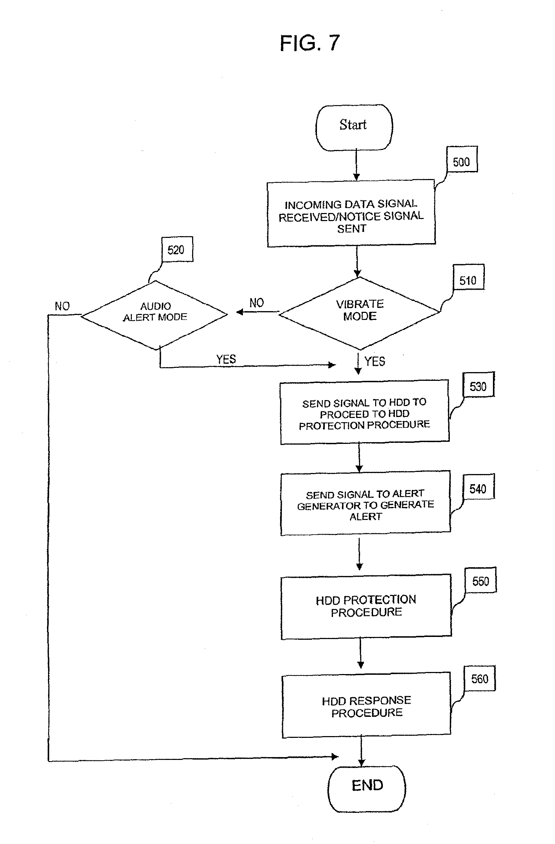

FIG. 7 is a flow chart illustrating a method of operating the HDD protection apparatus of FIG. 5, according to another embodiment of the present general inventive concept. As illustrated in FIG. 7, in operation 500, an incoming data signal is received by the signal receiver 400, and then a notice signal NS corresponding to the incoming data signal is generated and sent by the signal receiver 400 to the controller 220.

In operations 510 through 520, the controller 220 determines whether the electronic device 100 has been set to an alert mode. For example, in operation 510 the controller 120 determines whether the electronic device 100 has been set to a vibrate mode, and in operation 520 the controller determines whether the device is set to an audio alert mode. While FIGS. 6-7 illustrates an operation of the HDD protection apparatus where the controller 220 first determines whether the electronic device 100 has been set to a vibrate mode, or first determines whether the electronic device 100 has been set to a vibrate mode and then determines whether the device is set to an audio alert mode, respectively, the present general inventive concept is not limited thereto, and various configurations can be used to determine whether the electronic device 100 has been set to an alert mode. For example, the controller may check whether the electronic device 100 has been set to both an audio alert and a vibration alert over a predetermined threshold for duration and intensity.

Operations 530 through 550 of FIG. 7, are similar to those illustrated in FIG. 6, and thus, a detailed description thereof will be omitted for brevity and conciseness of the detailed description.

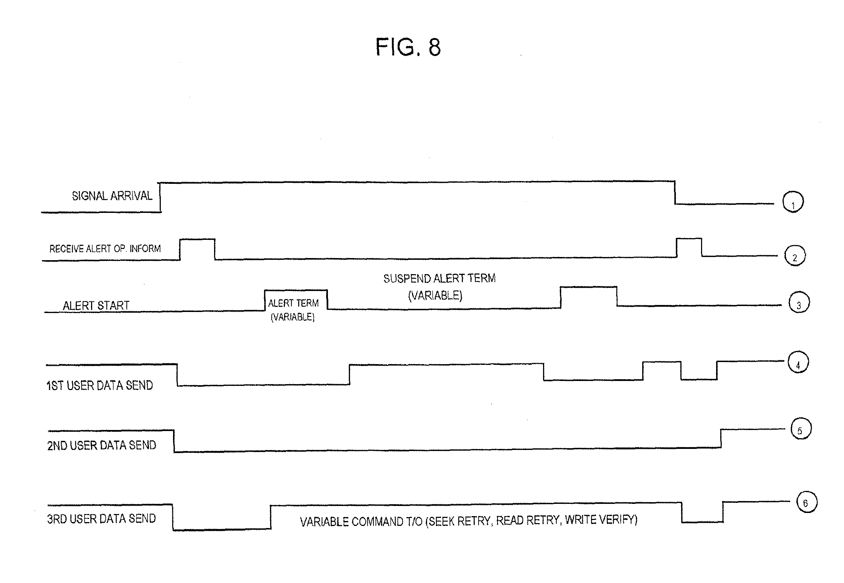

FIG. 8 illustrates a timing chart for an HDD and HDD protection apparatus according to an embodiment of the present general inventive concept. As illustrated in FIG. 8, line (1) illustrates a duration of an incoming data signal in an electronic device, for example, a phone call in a mobile phone. Line (2) illustrates an incoming data signal received by a controller. Line (3) illustrates a signal to generate an alert, for example, a pattern of a motor vibration. According to an aspect of the present general inventive concept, the HDD may be in a protected state during the generation of the alert signal. Lines (4)-(6) of FIG. 8 illustrate different examples of HDD access according to an embodiment of the present general inventive concept.

Line (4) illustrates an embodiment of the present general inventive concept wherein access to the HDD is available during periods between an alert signal generation, for example, between motor vibrations.

Line (5) illustrates an embodiment of the present general inventive concept wherein access to the HDD is available after an alert signal generation, for example, after a sequence of motor vibrations is complete.

Line (6) illustrates an embodiment of the present general inventive concept wherein access to the HDD is needed during a period of an alert signal generation. For example, access to the HDD may be required to increase the reliability of a read/write procedure of the HDD, and therefore the controller may control the HDD to increase the retry count of the read/write procedure, change the data transfer rate, or change a command proceeding time during an alert signal generation.

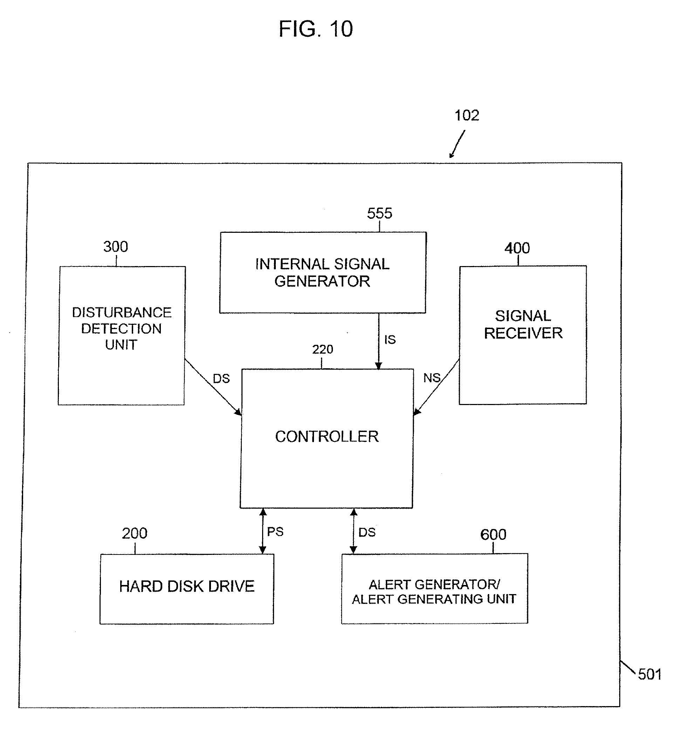

FIG. 10 illustrates an electronic device 102 having an HDD and a HDD protection apparatus according to another embodiment of the present general inventive concept. Detailed description of the components of the electronic device illustrated in FIG. 10 which are similar to those illustrated in FIGS. 5 and 9 are omitted for brevity and conciseness of the detailed description. As illustrated in FIG. 10, the electronic device 102, such as a mobile phone, a PDA, and the like, may include a controller 220, a disturbance detection unit 300, a signal receiver 400, an alert generator 600, and an HDD 200 disposed in a main frame 501. In addition, the electronic device 102 may also include an internal signal generator 555.

Operations of the disturbance detection unit 300, such as a free fall sensor, and the HDD 200, and the signal receiver 400, the vibration motor 500 or alert generator 600, and the HDD 200 are similar to that described with respect to the embodiments of FIG.S. 5 and 9.

However, in addition, the internal signal generator 555 may send an internal signal IS to the controller 220 to control the alert generator 600 to generate an alert. For example, the internal signal generator may send an internal signal IS in a case where the user requests a test of the alert generator 600, for example a ring-tone preview or an alert signal preview, or in a case where the alert generator 600 is controlled to generate an alert corresponding to an alarm setting, calendar setting, or the like. Accordingly, the controller 220 may control the HDD 200 to proceed to the HDD protection procedure either simultaneously or before controlling the alert generator 600 to generate the alert in a way similar to that described with respect to the notice signal NS of the signal receiver 400, in response to an internal signal IS from the internal signal generator 555.

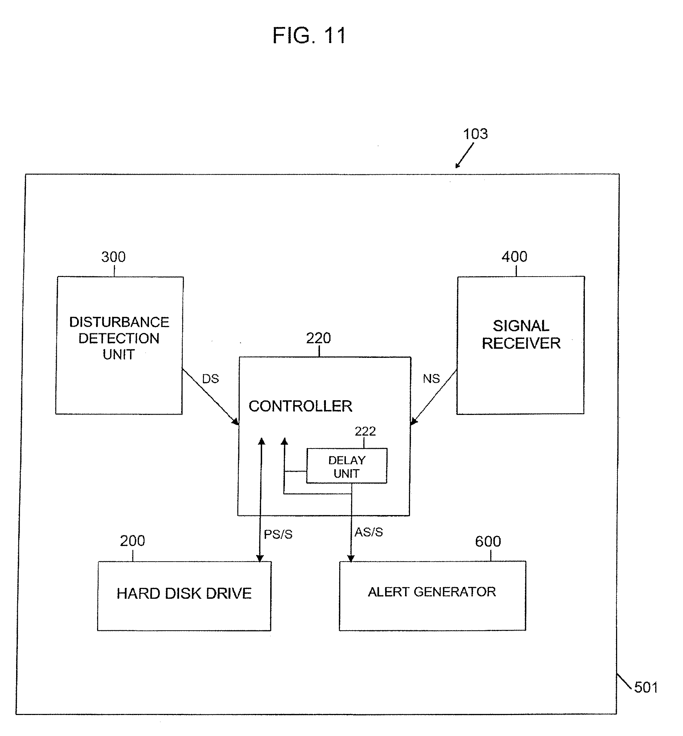

FIG. 11 illustrates an electronic device 103 having an HDD and an HDD protection apparatus according to yet another embodiment of the present general inventive concept. Detailed description of the components of the electronic device illustrated in FIG. 11 similar to those described with respect to the embodiments illustrated in FIGS. 5 and 9 are omitted for brevity and conciseness of the detailed description. As illustrated in FIG. 11, the electronic device 102, such as a mobile phone, a PDA, and the like, may include a controller 220, a disturbance detection unit 300, a signal receiver 400, an alert generator 600, and a HDD 200 disposed in a main frame 501.

Operation of the disturbance detection unit 300, such as a free fall sensor, and the HDD 200, and the signal receiver 400, the vibration motor 500 or alert generator 600, and the HDD 200 are similar to that described with respect to the embodiments of FIGS. 5 and 9. However, in addition, the controller 220 may also include a delay unit 222. The delay unit 222 serves to delay a transmission of a signal from the controller 220 to the alert generator 600. That is, the controller 220 can selectively choose to transmit an alert signal AS to the alert generator 600 through the delay unit 222 to delay the generation of the alert a predetermined time, while another signal, the protection signal PS, is sent without going to through the delay unit 222 to the HDD 200 to control the HDD 200 to proceed to the HDD protection procedure. Alternatively, the controller 220 may send a same signal S to both the HDD 200 and the alert generator 600, selectively sending the signal S to the alert generator 600 through the delay unit 222. Accordingly, by the time the alert generator 600 generates the alert, the HDD 200 is protected. Alternatively, when there is no need to delay transmission of the signal to the alert generator 600, for example, in a case where the HDD 200 is already in a protected status, disabled, or turned off, the controller 220 can send the alert generation signal AS, or the signal S, to the alert generator without going through the delay. As described above, the controller 220 and the HDD 200 may each have a system controller, such that, command and information exchange between the electronic device 100 and the HDD 200 may be available in various forms and procedures, including protection status and responses to signals to proceed to the HDD protection procedure.

As described above, an HDD and HDD protection apparatus and method, and electronic device having the same, enables the HDD to proceed to a HDD protection procedure before the generation of an alert signal, and thus protect the HDD from being affected by the alert signal or other type of disturbance.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A hard disk drive protection apparatus, comprising:
a notice signal generation unit (400) to generate a notice signal; and
a controller (220) to receive the notice signal (NS) and to control operations of the HDD and an alert generator (600) based on the notice signal (NS).

2. A hard disk drive protection apparatus, further comprising:
a hard disk drive (HDD, 200);
an alert generator (600).

3. The apparatus of claim 1 or 2, wherein the controlling of the HDD (200) and the alert generator (600) by the controller (220) comprises:
generating a protection control signal (PS) to control the HDD (200) to proceed to an HDD protection procedure; and
generating an alert control signal (AS) to control the alert generator (600) to generate an alert.

4. The apparatus of claim 3, wherein the controller (220) sends the protection control signal (PS) before sending the alert control signal (AS).

5. The apparatus of claim 3, wherein the controller (220) simultaneously sends the protection control signal (PS) and the alert control signal (AS).

6. The apparatus of claim 3, wherein the protection control signal (PS) and the alert control signal (AS) comprise the same control signal (S).

7. The apparatus of claim 6, further comprising:
a delay unit (222) to delay the control signal sent to the alert generator (600),
wherein the controller (220) selectively sends the control to the alert generator (600) through the delay unit (222) to delay the control signal a predetermined amount of time with respect to the control signal sent to the HDD (200).

8. The apparatus of claim 7, wherein the predetermined amount of time corresponds to a time for the HDD (200) to be protected under the HDD protection procedure.

9. The apparatus of any one of claims 1 to 8, wherein the notice signal generation unit (400) comprises a signal receiving unit (400) to receive an incoming data signal and to generate the notice signal (NS).

10. The apparatus of any one of claims 1 to 8, wherein the notice signal generation unit (400) comprises an internal notice signal generator to generate the notice signal (NS).

11. The apparatus of claim 10, wherein the internal notice signal generator generates the notice signal (NS) based on a user request.

12. The apparatus of any one of claims 1 to 8, wherein the notice signal generation unit comprises at least one of an internal notice signal generator and a signal receiving unit.

13. The apparatus of any one of claims 1 to 12, further comprising:
a disturbance detection unit (300) to detect a disturbance that affects the HDD (200) and to generate a disturbance notice (DS),
wherein the controller (220) receives the disturbance notice (DS) and controls the HDD (200) to proceed to the HDD protection procedure.

14. The apparatus of claim 13, wherein the disturbance detection unit (300) comprises a free fall sensor.

15. The apparatus of claim 9, wherein the incoming data signal includes a signal of arrival of a phone call or a message.

16. The apparatus of claim 9, wherein the alert generator (600) comprises at least one of a vibration generation unit and an audio alert generating unit.

17. The apparatus of claim 9, wherein the controller (220) controls the operations of the HDD (200) and the alert generator (600) by generating a control signal to protect the HDD (200) and to create an alert, and by sending the control signal to the HDD (200) and the alert generator (600) such that the HDD (200) is protected before the alert generator (600) generates the alert.

18. The apparatus of claim 17, wherein the control signal controls the HDD (200) to become protected before the alert generator (600) generates the alert.

19. The apparatus of claim 18, wherein the control signal includes information to control the HDD to become protected during time periods when the alert is created.

20. The apparatus of claim 19, wherein the control signal controls the HDD to become protected by disabling operations thereof.

21. The apparatus of claim 20, wherein the control signal controls the HDD to become disabled for a first predetermined amount of time before each occurrence of the alert and to become enabled for a second predetermined amount of time after completion of each occurrence of the alert.

22. The apparatus of claim 20, wherein the generation of the alert includes generation of a sequence of alerts, and the control signal controls the HDD to become disabled during the complete sequence of alerts.

23. The apparatus of claim 20, wherein the control signal controls the HDD to become disabled when the alert is determined to be greater that a predetermined threshold.

24. A mobile device, comprising:
an HDD (200) to read and/or write data from and/or to a disc;
an alert generator (600) to generate an alert in response to a second control signal;
a receiving unit (400) to receive an incoming data signal and to generate a notice signal based on the incoming data; and
a control unit (220) to generate a first control signal to control the HDD (200) to proceed to an HDD protection procedure and the second control signal to control the alert generator (600) in response to receiving the notice signal, and to transmit the first and second control signals to the HDD (200) and the alert generator (600), respectively.

25. The mobile device of claim 24, wherein the first control signal controls the HDD (200) to enter a protection mode before the alert generator (600) generates the alert.

26. The mobile device of claim 24, wherein the control unit (220) transmits the first control signal a predetermined amount of time before transmitting the second control signal such that the HDD (200) is controlled to enter into a protection mode before the alert generator (600) generates the alert.

27. The mobile device of claim 24, wherein the mobile device is one of a PDA, a cellular device, and a laptop computer.

28. A method of protecting an HDD in a device, the method comprising:
generating a notice signal when a notice to generate an alert is detected;
determining whether the device is in an alert mode that will affect the HDD;
controlling operation of the HDD and generation of the alert on the device, respectively, when it is determined that the device is in the affecting alert mode.

29. The method of claim 28, wherein the controlling of the operation of the HDD and the generation of the alert on the device comprises:
placing the HDD in a protection mode before the alert is generated.

30. A method of protecting an HDD in a device, the method comprising:
generating a notice signal when incoming data is received by the device;
determining whether the device is in an alert mode; and
controlling operation of the HDD and generation of the alert on the device, respectively, when it is determined that the device is in the alert mode.

31. The method of claim 30, wherein the controlling of the operation of the HDD comprises:
placing the HDD in a protection mode when it is determined that the device is in the alert mode.

32. The method of claim 31, wherein the protection mode comprises one of:
disabling the HDD during intervals of alert;
disabling the HDD throughout a complete set of alerts of the alert mode; and
controlling the HDD to perform predetermined operations throughout a complete set of alerts of the alert mode.

33. The method of claim 31, wherein the protection mode comprises one of:
disabling the HDD during intervals of alerts;
disabling the HDD throughout a complete set of alerts of the alert mode; and
controlling the HDD to perform specific operations throughout a complete set of alerts of the alert mode when the alerts are within a predetermined threshold level.

34. The method of claim 32, wherein the disabling of the HDD comprises placing an actuator in a parking mode.

35. The method of claim 31, wherein the placing of the HDD in a protection mode takes place before the alerts of the alert mode are generated.

36. The method of claim 30, wherein the controlling of operation of the HDD and alert of the device comprises controlling operations of the HDD before controlling the alerts of the mobile device.

37. The method of claim 36, wherein the controlling of operation of the HDD comprises controlling operations of the HDD to enter a protection mode during the alerts.

38. The method of claim 30, wherein the incoming data is a call signal.

39. A method of protecting an HDD in a device, the method comprising:
determining whether the device is in an alert mode when an incoming data signal is received; and
controlling operations of the HDD to correspond with an alert sequence of alerts during the alert mode when it is determined that the device is in the alert mode.

40. The method of claim 39, wherein the controlling of the operations of the HDD to correspond with the alert sequence comprises one of:
controlling the HDD to park an actuator thereof during the alerts;
controlling the HDD to park an actuator thereof during a complete set of alerts of the alert sequence; and
controlling the HDD to park an actuator thereof when alerts are above a predetermined threshold.

41. A mobile device, comprising:
a hard disk drive protection apparatus according to any one of claims 1 to 23.
